# EUROPÄISCHE PATENTSCHRIFT

(11) **EP 3 108 734 B1**
(45) Veröffentlichungstag und Bekanntmachung des Hinweises auf die Patenterteilung: **14.03.2018**
(21) Anmeldenummer: 16401034.0
(22) Anmeldetag: 26.05.2016
(51) Int. Cl.: A01C 7/08, B65G 53/42, A01C 15/00

(54) **VORRICHTUNG ZUM FÖRDERN VON AUF EINER LANDWIRTSCHAFTLICHEN FLÄCHE AUSZUBRINGENDEM GRANULAREM MATERIAL MIT VERBESSERTER PNEUMATISCHER FÖRDERUNG**
DEVICE FOR CONVEYING GRANULAR MATERIAL TO BE APPLIED TO AN AGRICULTURAL AREA, WITH IMPROVED PNEUMATIC CONVEYANCE
DISPOSITIF DE TRANSPORT PNEUMATIQUE AMELIORE DE MATERIAU GRANULAIRE A EPANDRE SUR UNE SURFACE AGRICOLE

(30) Priorität: 23.06.2015 DE 102015110011
(43) Veröffentlichungstag der Anmeldung: 28.12.2016
(73) Patentinhaber: Amazonen-Werke H. Dreyer GmbH & Co. KG, 49205 Hasbergen (DE)
(72) Erfinder: Wien, Thomas, 28816 Stuhr (DE)

(56) Entgegenhaltungen:
- EP-A1- 0 513 582
- DE-A1- 3 003 919
- GB-A- 191 504 814
- US-A- 3 031 233
- US-A- 4 474 327
- US-B1- 7 311 474

## Beschreibung

Die vorliegende Erfindung betrifft eine Vorrichtung zum Fördern von auf einer landwirtschaftlichen Fläche auszubringendem granularem Material.
Derartige Vorrichtungen finden beispielsweise in Einzelkornsämaschinen Anwendung, um Saatgut, welches in einem zentralen Saatgutvorratsbehälter angeordnet ist, zu den einzelnen Vereinzelungsgehäusen zu transportieren. Eine solche Vorrichtung ist beispielsweise aus der EP 2 298 056 B1 und der EP 2 591 656 bekannt.
Um das Saatgut aus dem zentralen Saatgutvorratsbehälter in den Förderstrom zu den einzelnen Vereinzelungsgehäusen zu bringen, ist es bekannt, Luft über ein Rohr in den Vorratsbehälter so einzublasen, dass die Luft wie auch das Saatgut in einem weiteren konzentrisch im Inneren des Rohrs liegenden Kernrohr aus dem zentralen Saatgutvorratsbehälter ausgebracht wird. Das Kernrohr bildet dabei den ersten Teil eines pneumatischen Förderkanals, der zu den separaten Vereinzelungsgehäusen führt. Ein solches System ist in der EP 0 513 582 A1, welche den Oberbegriff des Anspruches 1 bildet, beschrieben. Ähnliche Systeme finden auch in anderen Sämaschinen Anwendung, um Saatgut von einem zentralen Saatgutvorratsbehälter zu den jeweiligen Säaggregaten zu fördern.
Derartige Fördersysteme zeichnen sich auch dadurch aus, dass der Förderstrom unterbrochen wird, wenn im Vereinzelungsgehäuse bzw. Säaggregat genügend Saatgut angesammelt wurde. Dadurch kann bedarfsgerecht Saatgut nachgeliefert werden.
Wenn jedoch beim Wiederanlaufen des Förderprozesses neues Material aus dem zentralen Vorratsbehälter in den Förderkanal eingebracht wird, sich aber noch Saatgut im pneumatischen Förderkanal befindet, kann es bei den bekannten Systemen zu Verstopfungen kommen.

Aufgabe der vorliegenden Erfindung ist es daher, eine Vorrichtung zum Fördern von auf einer landwirtschaftlichen Fläche auszubringendem granularem Material bereitzustellen, welche eine verbesserte pneumatische Nachlieferung des granularen Materials aus einem zentralen Vorratsbehälter ermöglicht und insbesondere in vorteilhafter Weise Verstopfungen des pneumatischen Förderkanals vermeiden kann.

Diese Aufgabe wird durch eine Vorrichtung gemäß Patentanspruch 1 gelöst. Weitere vorteilhafte Ausgestaltungen der Erfindung sind in den abhängigen Ansprüchen angegeben.

Gemäß der Erfindung ist es also vorgesehen, dass im Kernrohr wenigstens eine Bohrung vorgesehen ist, über die Luft von der Lufteinlassöffnung unmittelbar oder direkt in das Kernrohr strömen kann. Auf diese Weise können Verstopfungen im pneumatischen Förderkanal vermieden werden, wenn nach einer Unterbrechung des Förderns des granularen Materials im pneumatischen Förderkanal beim Wiederanlaufen des Förderprozesses das verbleibende granulare Material zur Säeinrichtung (auch Säaggregat genannt) geblasen wird, bevor neues Material aus dem Vorratsbehälter in den Förderkanal eingebracht wird. Für dieses "Freiblasen" des pneumatischen Förderkanals kann Luft verwendet werden, die über die Bohrung in das Kernrohr strömt.

Der Teil der Luft, der über die Bohrung unmittelbar in das Kernrohr strömt kann außerdem als Unterstützung der pneumatischen Förderung des granularen Materials im pneumatischen Förderkanal von Vorteil sein.

Zusätzlich zur Luft, die über die Bohrung unmittelbar in das Kernrohr strömt, kann Luft von der Lufteinlassöffnung in einem Bereich zwischen dem Mantelrohr und dem Kernrohr in Richtung einer Öffnung des Kernrohrs im Vorratsbehälter strömen. Mit anderen Worten kann die Luft aus der Lufteinlassöffnung aufgeteilt werden, in einen Teil, der über die Bohrung direkt in das Kernrohr strömt und einen Teil, der in Richtung einer Öffnung des Kernrohrs strömt. Der Teil der Luft, der in Richtung der Öffnung des Kernrohrs strömt, kann granulares Material im Vorratsbehälter aufnehmen und in das Innere des Kernrohrs leiten. Die so erhaltene Luftströmung kann das granulare Material weiter entlang des pneumatischen Förderkanals zur Säeinrichtung fördern. Diese pneumatische Förderung kann durch den Teil der Luft, die über die Bohrung direkt in das Kernrohr strömt unterstützt werden.
Als Bohrung kann hierin insbesondere eine Durchgangsöffnung oder ein Durchgangsloch in der Wand des Kernrohrs verstanden werden.
Die Vorrichtung umfasst wenigstens ein Umlenkelement, welches so ausgebildet ist, dass Luft, die zwischen Kernrohr und Mantelrohr in Richtung einer Öffnung des Kernrohres strömt, in Richtung der Längsachse des Kernrohres umgelenkt wird.
Mit anderen Worten kann es vorgesehen sein, wenigstens ein Umlenkelement zu verwenden, um Luft in Richtung der Längsachse des Kernrohres umzulenken. Es hat sich herausgestellt, dass durch diese Maßnahme die Aufnahme des Saatguts in das Kernrohr verbessert wird. Auf zusätzliche Rührelemente oder die Ausbildung eines Fließbettes zum Aufwirbeln des Saatguts, wie im Stand der Technik verwendet, kann daher verzichtet werden. Durch das Umlenkelement wird die Luft insbesondere bereits beim Austritt aus dem Spalt zwischen Mantelrohr und Kernrohr in eine gewünschte Richtung gelenkt, insbesondere in Richtung des Inneren des Kernrohres, in der die pneumatische Förderung des granularen Materials zur Säeinrichtung stattfinden soll.

Das Umlenkelement ragt in Längsrichtung des Kernrohres über die Öffnung des Kernrohres hinaus und weist einen Luftkanal auf, der fluidisch mit dem Bereich zwischen dem Kernrohr und dem Mantelrohr verbunden ist und eine Krümmung in Richtung der Längsachse des Kernrohres aufweist. Auf diese Weise wird die aus dem Spalt zwischen Kern und Mantelrohr ausströmende Luft auf einfache Weise in Richtung der Längsachse des Kernrohres umgelenkt.
Die wenigstens eine Bohrung kann an einer Seite des Kernrohres angeordnet sein, die zur Lufteinlassöffnung hin gerichtet ist. Dadurch kann die Luftströmung optimiert werden.

Es ist auch möglich, dass mehrere Bohrungen im Kernrohr vorgesehen sind, die insbesondere bezüglich der Längsachse des Kernrohres symmetrisch angeordnet sind. Beispielsweise können vier Bohrungen vorgesehen sein, von denen sich jeweils zwei Bohrungen diametral gegenüber liegen. Jeweils zwei der Bohrungen sind in diesem Fall in Umfangsrichtung um 90° gegeneinander versetzt.

Die wenigstens eine Bohrung kann einen kreisförmigen oder rechteckigen Querschnitt aufweisen. Die Größe, insbesondere der Durchmesser, der wenigstens einen Bohrung kann so gewählt sein, dass der Anteil der Luft, der unmittelbar in das Kernrohr strömt, geringer ist, als der Anteil der Luft, der zwischen Mantelrohr und Kernrohr in Richtung der im Vorratsbehälter angeordneten Öffnung des Kernrohres strömt.

Die wenigstens eine Bohrung kann teilweise oder vollständig in einem Abschnitt des Kernrohres angeordnet sein, der nicht vom Mantelrohr umgeben wird.

Bei der Vorrichtung kann es sich insbesondere um ein Nachfüllsystem für eine Säeinrichtung einer landwirtschaftlichen Sämaschine handeln. Ein derartiges Nachfüllsystem wird auch als "Nursingsystem" bezeichnet.

Bei dem Vorratsbehälter kann es sich insbesondere um einen zentralen Vorratsbehälter handeln, von dem aus granulares Material an die Säeinrichtung förderbar ist. Es können auch mehrere Säeinrichtungen vorgesehen sein. In diesem Fall kann der Vorratsbehälter mit jeder der Säeinrichtungen über einen separaten pneumatischen Förderkanal zum pneumatischen Fördern von granularem Material an die jeweilige Säeinrichtung verbunden sein. Die pneumatischen Förderkanäle können sich auch wenigstens teilweise überschneiden.

Der Vorratsbehälter kann insbesondere zwei miteinander verbundene Kammern umfassen. Eine dieser Kammern kann derart ausgebildet sein, dass über sie das granulare Material in den pneumatischen Förderkanal einspeisbar ist. Diese Kammer kann als Nursingkammer bezeichnet werden.

Der pneumatische Förderkanal kann in diesem Fall insbesondere in die Nursingkammer münden und teilweise im Inneren der Nursingkammer angeordnet sein.

In diesem Fall kann die zweite Kammer als Nursingtank bezeichnet werden und zum Vorhalten des granularen Materials dienen. Dieser Nursingtank kann insbesondere wenigstens teilweise oberhalb der Nursingkammer angeordnet sein. Die Verbindung zwischen Nursingkammer und Nursingtank kann verschließbar sein.

Bei dem granularen Material kann es sich insbesondere um Saatgut handeln, alternativ oder zusätzlich jedoch auch um Düngemittel oder Pestizid.

Die Säeinrichtung kann eine Dosiereinrichtung, insbesondere eine Vereinzelungseinrichtung, umfassen oder einer solchen entsprechen.

Die Säeinrichtung, insbesondere die Vereinzelungseinrichtung, kann ein mit einem Überdruck beaufschlagtes Gehäuse, insbesondere Vereinzelungsgehäuse, umfassen. Das Gehäuse kann einen dezentralen Sammelbehälter für das über den pneumatischen Förderkanal zugeführte granulare Material umfassen. Der pneumatische Förderkanal kann dabei in das Gehäuse, insbesondere in den dezentralen Sammelbehälter, münden.

Die Vereinzelungseinrichtung kann zumindest eine mit einer Druckdifferenz beaufschlagbare Vereinzelungstrommel oder Vereinzelungsscheibe umfassen. Eine Vereinzelungstrommel oder Vereinzelungsscheibe kann insbesondere in Perforationsreihen angeordnete Perforationen aufweisen. An diesen Perforationen kann sich das granulare Material anlagern, wodurch es zu einer Vereinzelung kommt.

Die Vorrichtung kann außerdem ein Gebläse zum Einbringen von Luft in den pneumatischen Förderkanal umfassen. Mit Hilfe des Gebläses kann insbesondere im pneumatischen Förderkanal ein entsprechender Förderluftstrom erzeugt werden, mit dem das granulare Material pneumatisch gefördert werden kann. Durch das Gebläse kann im pneumatischen Förderkanal insbesondere ein Überdruck gegenüber dem Atmosphärendruck erzeugt werden.

Das Kernrohr und/oder das Mantelrohr können wenigstens abschnittsweise von einem Führungsrohr umgeben sein, wobei das Führungsrohr eine Lufteinlassöffnung aufweist, die über einen Zufuhrkanal mit dem Gebläse verbunden ist. Auf diese Weise kann die Luft in den Spalt zwischen Kernrohr und Mantelrohr eingebracht werden.

Insbesondere kann die Vorrichtung so ausgebildet sein, dass Luft von der Lufteinlassöffnung in einen Bereich oder Spalt zwischen dem Kernrohr und dem Mantelrohr strömen kann.

Das Kernrohr und das Mantelrohr können insbesondere konzentrisch zueinander angeordnet sein. Kernrohr und/oder Mantelrohr können zylindrisch ausgebildet sein. Das Mantelrohr kann einen Innendurchmesser aufweisen, der größer ist als der Außendurchmesser des Kernrohres. Der für das Durchströmen der Luft zwischen Kernrohr und Mantelrohr verfügbare Spalt oder Bereich kann somit senkrecht zur Luftströmungsrichtung eine Ausdehnung aufweisen, die der Differenz zwischen dem Innenradius des Mantelrohrs und dem Außenradius des Kernrohrs entspricht.

Das Führungsrohr kann ebenfalls wenigstens teilweise zylindrisch ausgebildet sein. Insbesondere kann auch das Führungsrohr konzentrisch zum Kernrohr und/oder Mantelrohr angeordnet sein.

Das Führungsrohr kann mit der Wandung des Vorratsbehälters, insbesondere der Wandlung der Nursingkammer verbunden sein. Das Mantelrohr kann wiederum am Führungsrohr befestigt sein. Alternativ oder zusätzlich kann das Mantelrohr auch über eine Befestigungseinrichtung an der Wandung des Vorratsbehälters, insbesondere der Nursingkammer, befestigt sein.

Das Umlenkelement kann insbesondere Teil des Mantelrohrs sein oder am Mantelrohr befestigt sein. Insbesondere kann das Umlenkelement nicht zerstörungsfrei lösbar am Mantelrohr angeordnet, beispielsweise eingeschweißt, sein.

Die Öffnung des Kernrohrs kann insbesondere im Inneren des Vorratsbehälters, insbesondere im Inneren der Nursingkammer, angeordnet sein.

Der pneumatische Förderkanal kann insbesondere in einer vertikalen Richtung in den Vorratsbehälter, insbesondere in die Nursingkammer, münden. Mit anderen Worten kann die Orientierung des Förderkanals im Bereich der Mündung in den Vorratsbehälter im Wesentlichen senkrecht sein, insbesondere mit der Horizontalen einen Winkel zwischen 85° und 95° einschließen. Der Winkel kann dabei insbesondere zwischen der Längsachse des Kernrohres und der Horizontalen bestimmt werden.

Das Kernrohr kann über den zentralen Vorratsbehälter hinausragen und entweder eigenständig oder in Verbindung mit weiteren Leitungsabschnitten oder Rohren den pneumatischen Förderkanal zur Säeinrichtung oder zu den Säeinrichtungen bilden.

Vom Zufuhrkanal zwischen Gebläse und Lufteinlassöffnung des Führungsrohres oder unmittelbar vom Gebläse kann eine Bypassleitung abzweigen, die außerhalb des Vorratsbehälters in den pneumatischen Förderkanal mündet. Eine derartige Bypassleitung kann zusätzlich zu der vorgesehenen wenigstens einen Bohrung die pneumatische Förderung des granularen Materials im pneumatischen Förderkanal unterstützen.

In der Bypassleitung kann ein Drosselventil angeordnet sein. Dadurch kann die Luftmenge im Bypass für eine optimale Förderung variiert werden.

Das wenigstens eine Umlenkelement kann eine in Richtung der Längsachse des Kernrohrs weisende Luftauslassöffnung umfassen, wobei die Größe der Luftauslassöffnung einstellbar ist, insbesondere mittels einer oder mehrerer Gewindestangen. Dadurch kann die Strömungsgeschwindigkeit variiert werden. Die Größe der Luftauslassöffnung kann insbesondere kleiner sein als die Querschnittsfläche des Ringspalts zwischen Kernrohr und Mantelrohr. Dadurch wird die Strömungsgeschwindigkeit der in Richtung der Längsachse des Kernrohres strömenden Luft erhöht. Dies wiederum verbessert die Aufnahme von granularem Material in den Förderluftstrom.

Das Umlenkelement kann insbesondere Teil des Mantelrohrs sein oder mit dem Mantelrohr verbunden sein, wobei das Mantelrohr über eine oder mehrere, insbesondere zwei, Gewindestangen mit einer Wandung des Vorratsbehälters, insbesondere der Nursingkammer, verbunden ist. Mit Hilfe der Gewindestangen kann die Position des Mantelrohrs (und damit des Umlenkelements) relativ zur Öffnung des Kernrohrs variiert werden. Dies wiederum erlaubt die Einstellung der Größe der Luftauslassöffnung des Umlenkelements.

Die Vorrichtung kann insbesondere zwei Umlenkelemente umfassen, die jeweils eine in Richtung der Längsachse des Kernrohrs weisende Luftauslassöffnung umfassen, wobei sich die Luftauslassöffnungen der Umlenkelemente diametral gegenüberliegen. Auf diese Weise kann der Luftstrom vorteilhaft in Richtung der Längsachse des Kernrohres und weiter in die Förderluftströmung innerhalb des Kernrohrs umgelenkt werden.

Die oben genannte Vorrichtung kann insbesondere Teil eines landwirtschaftlichen Geräts zum Ausbringen von granularem Material auf einer landwirtschaftlichen Fläche sein. Bei dem landwirtschaftlichen Gerät kann es sich insbesondere um eine Sämaschine handeln. Mit anderen Worten stellt die Erfindung außerdem eine Sämaschine bereit, welche eine der oben genannten Vorrichtungen umfasst. Die Sämaschine kann insbesondere eine Einzelkornsämaschine sein.

Weitere Merkmale und Vorteile der Erfindung werden nachfolgend anhand der beispielhaften Figuren erläutert. Dabei zeigt:
- Figur 1: eine schematische Darstellung einer erfindungsgemäßen Vorrichtung;
- Figur 2: eine perspektivische Ansicht von Elementen der erfindungsgemäßen Vorrichtung;
- Figur 3: einen Querschnitt durch einen Teil einer erfindungsgemäßen Vorrichtung;
- Figur 4: einen weiteren Querschnitt durch einen Teil einer erfindungsgemäßen Vorrichtung;
- Figur 5: eine perspektivische Ansicht von Elementen einer erfindungsgemäßen Vorrichtung;
- Figur 6: einen Querschnitt der Darstellung nach Figur 5; und
- Figur 7: eine weitere perspektivische Ansicht von Elementen einer erfindungsgemäßen Vorrichtung.

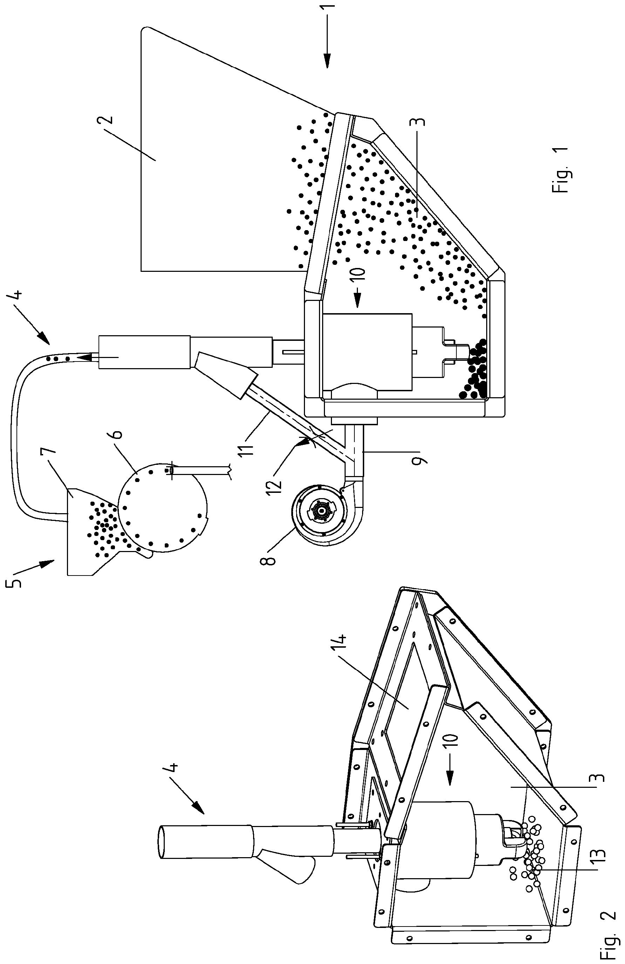

Figur 1 zeigt schematisch ein Beispiel einer Vorrichtung zum Fördern von auf einer landwirtschaftlichen Fläche auszubringendem granularem Material. Die Vorrichtung umfasst dabei einen zentralen Vorratsbehälter 1 für das auszubringende granulare Material. Der Vorratsbehälter 1 umfasst dabei zwei Elemente, nämlich ein Vorratsreservoir 2 (auch Nursingtank genannt) und eine Einspeiseeinrichtung 3 (auch Nursingkammer genannt). Die Einspeiseeinrichtung 3 dient dazu, granulares Material in einen pneumatischen Förderkanal 4 einzuspeisen.

Bei dem granularen Material kann es sich insbesondere um Saatgut, alternativ jedoch auch um granularen Dünger oder granulare Pestizide handeln.

Der pneumatische Förderkanal 4 verbindet den zentralen Fördertank 1 mit einer Vereinzelungsvorrichtung 5, welche eine Vereinzelungstrommel oder Vereinzelungsscheibe 6 sowie einen dezentralen Sammelbehälter 7 für das granulare Material aufweist. Die Vereinzelungseinrichtung 5 kann insbesondere einer bekannten Vereinzelungseinrichtung einer Einzelkornsämaschine entsprechen. Weitere Details zur Vereinzelungseinrichtung 5 werden hierin daher nicht angegeben.

Die vorliegende Erfindung ist jedoch nicht auf Einzelkorntechnik beschränkt. Anstelle der Vereinzelungsvorrichtung 5 und der Vereinzelungsscheibe 6 können auch andere Säaggregate und Dosiereinrichtungen jeder Bauart vorgesehen sein.

Die Säeinrichtung kann auch Abgabeelemente umfassen, um das granulare Material im Boden abzulegen. Bei diesen Abgabeelementen, hier nicht dargestellt, kann es sich beispielsweise um Säschare handeln.

Figur 1 zeigt außerdem ein Gebläse 8, welches über einen Zufuhrkanal 9 mit einem Abschnitt 10 des pneumatischen Förderkanals 4 verbunden ist, der im Inneren der Nursing-kammer 3 angeordnet ist. Der Abschnitt 10 des pneumatischen Förderkanals 4 wird im Folgenden noch detailliert beschrieben.

Vom Zufuhrkanal 9 zweigt in diesem Beispiel eine Bypassleitung 11 ab, die außerhalb der Nursingkammer 3 in den pneumatischen Förderkanal 4 mündet. Diese Bypassleitung 11 dient zur Verbesserung der Förderung des granularen Materials in dem pneumatischen Förderkanal 4. Ferner kann beim Wiederanlaufen des Förderprozesses nach einer Unterbrechung im pneumatischen Förderkanal 4 verbleibendes granulares Material zur Vereinzelung gefördert werden, bevor über die Nursingkammer 3 erneut granulares Material nachgeliefert wird. So wird einer Verstopfung im pneumatischen Förderkanal 4 vorgebeugt.

In der Bypassleitung 11 ist ein Drosselventil 12 vorgesehen, mit dem die Luftmenge in der Bypassleitung 11 einstellbar ist.

Diese Bypassleitung 11 kann zusätzlich zu der nachfolgend noch beschriebenen Bohrung im Kernrohr 15 vorgesehen sein. Sie ist jedoch optional und kann auch weggelassen werden.

Figur 2 zeigt perspektivisch eine Ansicht der Nursingkammer 3 sowie von Teilen des pneumatischen Förderkanals 4. Schematisch dargestellt ist Saatgut 13, welches sich in einem Bodenbereich der Nursingkammer 3 befindet. Zu sehen ist außerdem eine Durchgangsöffnung 14, welche die Nursingkammer 3 mit dem Nursingtank 2 verbindet. Diese Öffnung 14 kann verschließbar sein.

Schließlich ist in Figur 2 auch der Abschnitt 10 des pneumatischen Förderkanals 4 zu sehen, der im Inneren Nursingkammer 3 angeordnet ist.

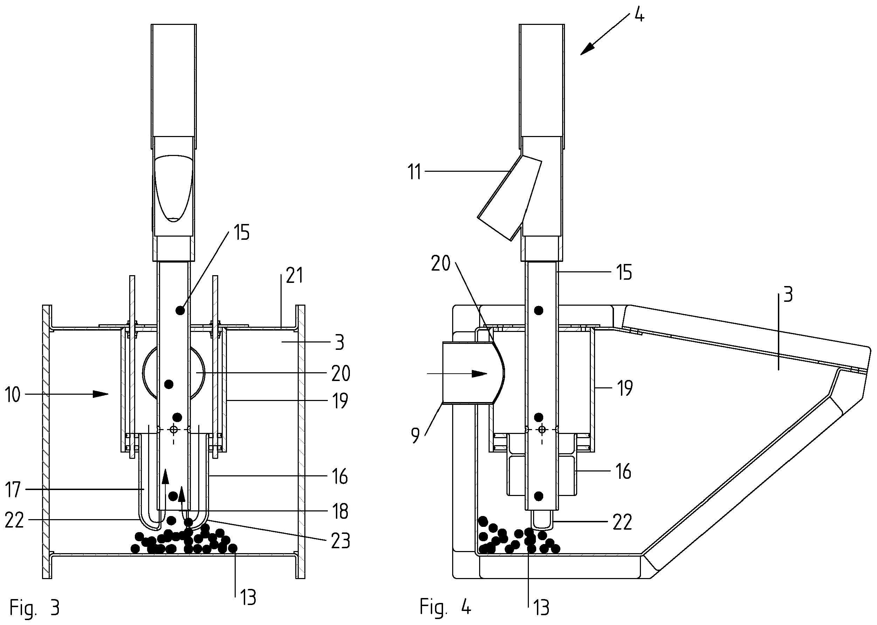

Die Struktur dieses Abschnitts 10 wird aus dem Querschnitt der Figur 3 genauer ersichtlich. Wie man der Figur 3 entnehmen kann, umfasst Abschnitt 10, der im Inneren der Nursingkammer 3 angeordnet ist, ein Kernrohr 15 sowie ein Mantelrohr 16, welches das Kernrohr 15 wenigstens abschnittsweise umgibt. Sowohl Kernrohr 15 als auch Mantelrohr 16 sind in diesem Beispiel zylindrisch ausgebildet und konzentrisch zueinander angeordnet. Der Innendurchmesser des Mantelrohrs 16 ist dabei größer als der Außendurchmesser des Kernrohrs 15. Dadurch entsteht ein Bereich oder Spalt 17, in dem Luft zwischen Mantelrohr und Kernrohr in Richtung einer in der Nursingkammer 3 angeordneten Öffnung 18 des Kernrohrs 15 strömen kann. Die Luftströmung ist durch Pfeile in der Figur 3 veranschaulicht.

Das Mantelrohr 16 und das Kernrohr 15 werden abschnittsweise außerdem durch ein Führungsrohr 19 umgeben, das in diesem Beispiel ebenfalls zylindrisch ausgebildet ist und konzentrisch zum Kernrohr 15 und zum Mantelrohr 16 angeordnet ist. Das Führungsrohr 19 weist eine in Figur 3 nur teilweise ersichtliche Öffnung 20 auf, über die die Zufuhrleitung 9 aus Figur 1 vom Gebläse in das Führungsrohr 19 mündet. Über die Öffnung 20 einströmende Luft vom Gebläse wird in Richtung der Öffnung 18 durch den Spalt 17 zwischen Kernrohr 15 und Mantelrohr 16 geleitet.

Das Führungsrohr 19 ist hier mit einem oberen Wandungsteil 21 der Nursingkammer 3 verbunden.

In Figur 3 erkennt man, dass das Mantelrohr 16 in diesem Beispiel zwei gegenüberliegende Umlenkelemente 22, 23 umfasst, die in Längsrichtung des Kernrohrs 15 über die Öffnung 18 hinausragen. Diese Umlenkelemente 22, 23 sind so ausgebildet, dass Luft, die durch den Spalt 17 zwischen Kernrohr 15 und Mantelrohr 16 in Richtung der Öffnung 18 strömt, zur Längsachse des Kernrohrs 15 umgelenkt wird. Dadurch entsteht ein Förderluftstrom, der entgegengesetzt zur ursprünglichen Strömungsrichtung im Spalt 17 gerichtet ist, und innerhalb des Kernrohres in Förderrichtung zur in der Figur 1 gezeigten Vereinzelungseinrichtung 5 führt. Diese Förderluftströmung nimmt granulares Material 13 auf, welches im Bodenbereich der Nursingkammer 3 angeordnet ist.

Figur 4 zeigt einen weiteren Querschnitt durch die Darstellung der Figur 2. Die Schnittebene ist hier um 90° gegenüber der Schnittebene der Figur 3 gedreht.

In der Figur 4 ist ein Teil des Zufuhrkanals 9 zu sehen, der über die Öffnung 20 in das Führungsrohr 19 mündet.

Auch ist eines der Umlenkelemente 22 in Figur 4 zu sehen. Es ist ersichtlich, dass es sich bei dem Umlenkelement 22 um eine Nase handelt, welche eine Krümmung aufweist, die zur Mittelachse des Kernrohrs 15 hin gekrümmt ist. Das Umlenkelement 23, das dem Umlenkelement 22 diametral gegenüberliegt, kann entsprechend ausgebildet sein.

Granulares Material, das wie soeben beschrieben in das Kernrohr 15 eingebracht wird, kann durch die Luftströmung im Kernrohr 15 dann entlang des pneumatischen Förderkanals 4 weiter zur Vereinzelungseinrichtung 5 gefördert werden. Zur Unterstützung des Transports kann Luft vom Gebläse 8 über die Bypassleitung 11 in den pneumatischen Förderkanal 4 eingebracht werden, wie in Figur 1 dargestellt. In Figur 4 ist ein Teil der Bypassleitung 11 zu sehen, die in den pneumatischen Förderkanal 4 mündet.

Ebenfalls aus den Figuren 1 bis 4 ersichtlich ist, dass der pneumatische Förderkanal 4 und insbesondere das Kernrohr 15 in einer vertikalen Richtung (senkrecht) in den Vorratsbehälter 1, insbesondere in die Nursingkammer 3, mündet. Dadurch ist eine kompakte Anordnung möglich.

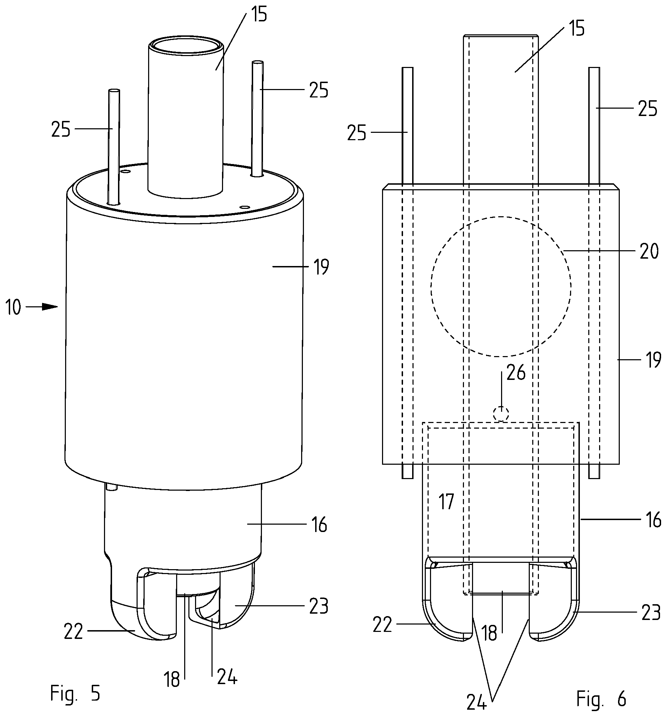

Die Figuren 5 und 6 zeigen nochmals im Detail den Abschnitt 10 des pneumatischen Förderkanals, der im Inneren der Nursingkammer 3 angeordnet ist. Figur 5 zeigt dabei eine perspektivische Ansicht, während Figur 6 einen Querschnitt der Ansicht aus Figur 5 zeigt.

Zunächst zeigt Figur 5 das Führungsrohr 19, welches abschnittsweise das Kernrohr 15 und das Mantelrohr 16 umgibt. In Figur 5 sind die beiden als Nasen ausgebildeten Umlenkelemente 22 und 23 gut zu erkennen, die mit dem Mantelrohr 16 verbunden sind. In Figur 5 ist auch eine Luftauslassöffnung 24 des Umlenkelements 23 zu erkennen, welche in Richtung der Längsachse des Kernrohrs 15 weist. Aus dieser Luftauslassöffnung 24 sowie einer entsprechenden Luftauslassöffnung des Umlenkelements 22 strömt Luft aus dem Kreisspalt 17 (Figur 3) zwischen Mantelrohr 16 und Kernrohr 15 in Richtung der Längsachse des Kernrohrs 15 und insbesondere in Richtung der Öffnung 18 des Kernrohrs 15. Dadurch entsteht, wie beschrieben, ein Förderluftstrom innerhalb des Kernrohrs 15, der zur Vereinzelungseinrichtung 5 hin gerichtet ist, und der granulares Material aus dem Bodenbereich der Nursingkammer mitreißt und zur Vereinzelungseinrichtung 5 fördert.

Der Querschnitt der Luftauslassöffnung 24 und der entsprechenden Luftauslassöffnung des Umlenkelements 22 kann geringer sein, als der Querschnitt des Ringspalts 17 zwischen Mantelrohr 16 und Kernrohr 15. Dadurch kommt es zu einer Beschleunigung der Luftströmung, was das Mitreißen von granularem Material begünstigt. Die Größe der Luftauslassöffnung 24 und der entsprechenden Luftauslassöffnung des Umlenkelements 22 kann einstellbar sein. Dies kann mittels Gewindestangen 25 geschehen, welche die Position des Mantelrohrs 16 und damit der Umlenkelemente 22, 23 in Bezug auf die Öffnung 18 des Kernrohrs 15 einstellbar machen. Wie aus Figur 3 ersichtlich, sind die Gewindestangen 25 mit dem Mantelrohr 16 verbunden, sowie mit der oberen Gehäusewandung 21 der Nursingkammer 3. Damit kann also die Höhenposition des Mantelrohrs 16 und somit der Umlenkelemente 22, 23 eingestellt werden. Damit lässt sich auch die Größe der Auslassöffnungen 24 der Umlenkelemente 22, 23 variieren.

Figur 6 zeigt noch einen Querschnitt der Darstellung aus Figur 5. In Strichlinien ist die Öffnung 20 zu erkennen, über die der Zufuhrkanal 9 vom Gebläse in das Führungsrohr 19 mündet.

Zu sehen ist in Figur 6 auch eine Bohrung 26 im Kernrohr 15, über die Luft von der Lufteinlassöffnung 20 unmittelbar in das Kernrohr 15 strömen kann. Über diesen kann ein Teil der Luft durch die Bohrung 26 unmittelbar in das Innere des Kernrohrs 15 strömen, während ein anderer Teil über den Ringspalt 17 hin zur Öffnung 18 des Kernrohrs 15 strömt. Der Teil der Luft, der durch die Bohrung 26 strömt, kann die pneumatische Förderung des granularen Materials im Kernrohr 15 verbessern. Es können eine oder mehrerer solcher Bohrungen vorgesehen sein.

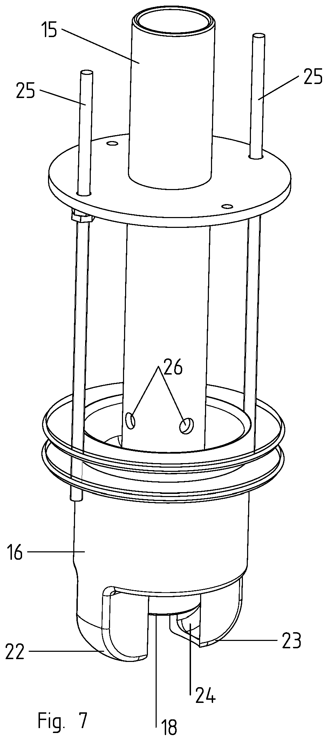

Figur 7 zeigt eine weitere perspektivische Ansicht von Elementen einer erfindungsgemäßen Vorrichtung. Die gezeigten Elemente entsprechen weitestgehend den in den Figuren 5 und 6 beschriebenen. Auf diese Elemente wird daher nachfolgend nicht mehr eingegangen.

Figur 7 zeigt außerdem zwei Bohrungen 26, die in Umfangsrichtung um 90° versetzt zueinander angeordnet sind. Jeweils diametral gegenüberliegend zu den zwei Bohrungen 26 können weitere zwei - hier nicht dargestellte - Bohrungen vorgesehen sein. Die Bohrungen können also bezüglich der Längsachse des Kernrohres 15 symmetrisch angeordnet sein.

Die Bohrungen 26 sind hier als Durchgangsöffnungen oder Durchgangslöcher ausgebildet und weisen einen kreisförmigen Querschnitt auf. Andere Geometrien der Bohrungen 26 sind jedoch ebenso möglich. Beispielsweise könnten die Bohrungen auch rechteckig ausgebildet sein und somit Luftschlitze bilden.

Es versteht sich, dass in den zuvor beschriebenen Ausführungsbeispielen genannte Merkmale nicht auf diese speziellen Kombinationen beschränkt sind und auch in beliebigen anderen Kombinationen möglich sind. Auch ist die Geometrie und die relative Lage der einzelnen Rohre des Abschnitts 10 nicht auf die gezeigte Geometrie beschränkt. Außerdem können auch weniger oder mehr Umlenkelemente als dargestellt vorgesehen sein. Schließlich ist die vorliegende Erfindung, wie erwähnt, nicht auf Einzelkorntechnik beschränkt und kann auch in Kombination mit anderen Säaggregaten verwendet werden.

## Patentansprüche

1. Vorrichtung zum Fördern von auf einer landwirtschaftlichen Fläche auszubringendem granularem Material, umfassend:
einen Vorratsbehälter (1) für das granulare Material;
eine Säeinrichtung (5); und
einen pneumatischen Förderkanal (4) zum pneumatischen Fördern von granularem Material vom Vorratsbehälter (1) zur Säeinrichtung (5);
wobei der pneumatische Förderkanal (4) in den Vorratsbehälter (1) mündet und teilweise im Inneren des Vorratsbehälters (1) angeordnet ist,
wobei der pneumatische Förderkanal (4) im Inneren des Vorratsbehälters (1) ein Kernrohr (15) umfasst, das wenigstens abschnittsweise von einem Mantelrohr (16) umgeben wird, wobei das Kernrohr (15) und/oder das Mantelrohr (16) wenigstens abschnittsweise von einem Führungsrohr (19) umgeben wird, wobei das Führungsrohr (19) eine Lufteinlassöffnung (20) aufweist, die über einen Zufuhrkanal (9) mit einem Gebläse (8) verbunden ist, wobei die Vorrichtung so ausgebildet ist, dass Luft von der Lufteinlassöffnung (20) in einen Bereich (17) zwischen dem Kernrohr (15) und dem Mantelrohr (16) in Richtung einer Öffnung (18) des Kernrohres (15) strömen kann, **dadurch gekennzeichnet, dass** die Vorrichtung wenigstens ein Umlenkelement (22, 23) umfasst, welches so ausgebildet ist, dass Luft, die zwischen Kernrohr (15) und Mantelrohr (16) in Richtung der Öffnung (18) des Kernrohres (15) strömt, in Richtung der Längsachse des Kernrohres (15) umgelenkt wird, und dass das Umlenkelement (22, 23) mit seiner Luftauslassöffnung (24)in Längsrichtung des Kernrohres (15) über die Öffnung (18) des Kernrohres (15) hinausragt und einen Luftkanal aufweist, der fluidisch mit dem Bereich (17) zwischen dem Kernrohr (15) und dem Mantelrohr (16) verbunden ist und eine Krümmung in Richtung der Längsachse des Kernrohres (15) aufweist, und dass im Kernrohr (15) wenigstens eine Bohrung (26) vorgesehen ist, über die Luft von der Lufteinlassöffnung (20) unmittelbar in das Kernrohr (15) strömen kann.

2. Vorrichtung nach Anspruch 1, wobei die wenigstens eine Bohrung (26) an einer Seite des Kernrohres (15) angeordnet ist, die zur Lufteinlassöffnung (20) hin gerichtet ist.

3. Vorrichtung nach Anspruch 1 oder 2, wobei mehrere Bohrungen (26) im Kernrohr (15) vorgesehen sind, die insbesondere bezüglich der Längsachse des Kernrohres (15) symmetrisch angeordnet sind.

4. Vorrichtung nach einem der vorangegangenen Ansprüche, wobei die wenigstens eine Bohrung (26) einen kreisförmigen oder rechteckigen Querschnitt aufweist.

5. Vorrichtung nach einem der vorangegangenen Ansprüche, wobei die wenigstens eine Bohrung (26) teilweise oder vollständig in einem Abschnitt des Kernrohres (15) angeordnet ist, der nicht vom Mantelrohr (16) umgeben wird.

6. Vorrichtung nach einem der vorangegangenen Ansprüche, wobei der pneumatische Förderkanal (4) in einer vertikalen Richtung in den Vorratsbehälter (1) mündet.

7. Vorrichtung nach einem der Anspruch 6, wobei zwei Umlenkelemente (22, 23) vorgesehen sind, die jeweils eine in Richtung der Längsachse weisende Luftauslassöffnung (24) umfassen, wobei sich die Luftauslassöffnungen (24) der Umlenkelemente (22, 23) diametral gegenüber liegen.

8. Sämaschine umfassend eine Vorrichtung nach einem der vorangegangenen Ansprüche.

## Claims

1. Device for conveying granular material to be applied to an agricultural area, comprising:
a storage container (1) for the granular material;
a sowing device (5); and
a pneumatic conveying duct (4) for the pneumatic conveying of granular material from the storage container (1) to the sowing device (5);
wherein the pneumatic conveying duct (4) opens into the storage container (1) and is partially arranged in the interior of the storage container (1),
wherein, in the interior of the storage container (1), the pneumatic conveying duct (4) comprises a core tube (15) which is surrounded at least in sections by a casing tube (16), wherein the core tube (15) and/or the casing tube (16) is surrounded at least in sections by a guide tube (19), wherein the guide tube (19) has an air inlet opening (20) which is connected via a supply duct (9) to a fan (8), wherein the device is designed in such a manner that air can flow from the air inlet opening (20) into a region (17) between the core tube (15) and the casing tube (16) in the direction of an opening (18) in the core tube (15), **characterized in that** the device comprises at least one deflecting element (22, 23) which is designed in such a manner that air which flows between the core tube (15) and the casing tube (16) in the direction of the opening (18) in the core tube (15) is deflected in the direction of the longitudinal axis of the core tube (15), and **in that** the deflecting element (22, 23) projects with its air outlet opening (24) beyond the opening (18) in the core tube (15) in the longitudinal direction of the core tube (15) and has an air duct which is fluidically connected to the region (17) between the core tube (15) and the casing tube (16) and has a curvature in the direction of the longitudinal axis of the core tube (15),
and **in that** at least one hole (26) is provided in the core tube (15), via which hole air can flow from the air inlet opening (20) directly into the core tube (15).

2. Device according to Claim 1, wherein the at least one hole (26) is arranged on a side of the core tube (15) directed towards the air inlet opening (20).

3. Device according to Claim 1 or 2, wherein a plurality of holes (26) are provided in the core tube (15), the holes in particular being arranged symmetrically with respect to the longitudinal axis of the core tube (15).

4. Device according to one of the preceding claims, wherein the at least one hole (26) has a circular or rectangular cross section.

5. Device according to one of the preceding claims, wherein the at least one hole (26) is partially or completely arranged in a portion of the core tube (15) that is not surrounded by the casing tube (16).

6. Device according to one of the preceding claims, wherein the pneumatic conveying duct (4) opens into the storage container (1) in a vertical direction.

7. Device according to one of Claim 6, wherein two deflecting elements (22, 23) which each comprise an air outlet opening (24) pointing in the direction of the longitudinal axis are provided, wherein the air outlet openings (24) of the deflecting elements (22, 23) lie diametrically opposite one another.

8. Sowing machine comprising a device according to one of the preceding claims.

## Revendications

1. Ensemble pour le transport d'un matériau granulaire à appliquer sur une surface agricole, l'ensemble comprenant :
un récipient de réserve (1) pour le matériau granulaire,
un dispositif de semis (5) et
un canal (4) de transport pneumatique qui transporte pneumatiquement le matériau granulaire entre le récipient de réserve (1) et le dispositif de semis (5),
le canal de transport pneumatique (4) débouchant dans le récipient de réserve (1) et étant disposé en partie à l'intérieur du récipient de réserve (1),
le canal de transport pneumatique (4) comprenant à l'intérieur du récipient de réserve (1) un tube d'âme (15) dont au moins certaines parties sont entourées par un tube d'enveloppe (16), au moins certaines parties du tube d'âme (15) et/ou du tube d'enveloppe (16) étant entourées par un tube de guidage (19),
le tube de guidage (19) présentant une ouverture (20) d'admission d'air reliée à un ventilateur (8) par un canal d'amenée (9),
l'ensemble étant configuré de telle sorte que l'air provenant de l'ouverture (20) d'admission d'air peut s'écouler en direction d'une ouverture (18) du tube d'âme (15) dans une partie (17) située entre le tube d'âme (15) et le tube d'enveloppe (16), **caractérisé en ce que**
l'ensemble comporte au moins un élément de déviation (22, 23) configuré de telle sorte que l'air qui s'écoule entre le tube d'âme (15) et le tube d'enveloppe (16) en direction de l'ouverture (18) du tube d'âme (15) est dévié dans la direction de l'axe longitudinal du tube d'âme (15),
**en ce que** l'élément de déviation (22, 23) déborde par son ouverture (24) de sortie d'air dans le sens de la longueur du tube d'âme (15) au-delà de l'ouverture (18) du tube d'âme (15), présente un canal à air relié à l'écoulement à la partie (17) située entre le tube d'âme (15) et le tube d'enveloppe (16) et présente une courbure dans la direction de l'axe longitudinal du tube d'âme (15) et
**en ce qu'**au moins un alésage (26) par lequel l'air provenant de l'ouverture (20) d'admission d'air peut s'écouler directement dans le tube d'âme (15) est prévu dans le tube d'âme (15).

2. Ensemble selon la revendication 1, dans lequel le ou les alésages (26) sont disposés sur un côté du tube d'âme (15) orienté vers l'ouverture (20) d'admission d'air.

3. Ensemble selon les revendications 1 ou 2, dans lequel plusieurs alésages (26) sont prévus dans le tube d'âme (15) et sont disposés en particulier de manière symétrique par rapport à l'axe longitudinal du tube d'âme (15).

4. Ensemble selon l'une des revendications précédentes, dans lequel le ou les alésages (26) présentent une section transversale circulaire ou rectangulaire.

5. Ensemble selon l'une des revendications précédentes, dans lequel le ou les alésages (26) sont disposés en partie ou complètement dans une section du tube d'âme (15) qui n'est pas entourée par le tube d'enveloppe (16).

6. Ensemble selon l'une des revendications précédentes, dans lequel le canal de transport pneumatique (4) débouche dans le récipient de réserve (1) dans la direction verticale.

7. Ensemble selon l'une de la revendication 6, dans lequel deux éléments de déviation (22, 23) sont prévus et comportent chacun une ouverture (24) de sortie d'air orientée dans la direction de l'axe longitudinal, les ouvertures (24) de sortie d'air étant disposées en position diamétralement opposée aux éléments de déviation (22, 23).

8. Semeuse comprenant un ensemble selon l'une des revendications précédentes.
